# EUROPEAN PATENT APPLICATION

(11) **EP 3 690 621 A1**
(43) Date of publication of application: **05.08.2020**
(21) Application number: 18861665.0
(22) Date of filing: 29.06.2018
(51) Int. Cl.: G06F 3/044

(54) **IDENTIFICATION METHOD AND APPARATUS FOR TOUCH OPERATION, AND ELECTRONIC DEVICE**

(30) Priority: 26.09.2017 CN 201710884501
(71) Applicant: Mobvoi Information Technology Co., Ltd., Beijing 100094 (CN)
(72) Inventor: ZHOU, Yu, Beijing 100094 (CN); ZENG, Sen, Beijing 100094 (CN); ZHAO, Chensi, Beijing 100094 (CN)
(74) Representative: Huang, Liwei
(86) International application number: PCT/CN2018/093788
(87) International publication number: WO 2019/062243

(57) **Abstract**

Disclosed are a method and apparatus for identifying a touch operation, and an electronic device, which relate to the technical field of information processing and are mainly aimed at improving the accuracy of identification of touch operations to reduce the product cost, while reducing the number of touch areas. The main technical solution of the present disclosure includes: when receiving a touch operation on a touch region, calculating a capacitance value corresponding to the touch operation, where the touch area of the touch region gradually decreases from one end to the other end; calculating an effective touch area of the touch operation in the touch region according to the capacitance value; and determining a touch control instruction corresponding to the touch operation according to the capacitance value and the effective touch area. The present invention is mainly applied to the using process of a touch wireless earphone.

## Description

The present application is based on and claims priority to Chinese Patent Application No. 201710884501.4, filed on September 26, 2017, the content of which is incorporated herein by reference in its entirety.

### TECHNICAL FIELD

Embodiments of the present disclosure relate to the field of information processing, and more particularly, to a method and apparatus for identifying a touch operation, and an electronic device.

### BACKGROUND

With the popularity of various types of smart terminals, more and more smart terminals tend to use touch screens, such that users can operate smart terminals flexibly through touch screens. Common touch screens on the market include capacitive touch screens. Since the capacitive touch screens have characteristics of directness, high efficiency, accuracy, smooth, and the like, the capacitive touch screens have greatly improved the efficiency and convenience of human-computer interaction.

The existing capacitive touch screens are mainly divided into self-capacitive screens and mutual capacitive screens. For self-capacitive screens, one control key corresponds to one touch area. For mutual capacitive screens, if the number of keys is N, the number of corresponding touch areas is N + 1 (N is a positive integer greater than 1).

In the process of implementing the above touch screens, the inventor found that in the existing art, an accuracy of identifying a touch operation by a touch chip (touch IC) is closely associated with the number of touch areas. The greater the number of touch areas, the higher the accuracy of the identification of the touch operation. However, the price of the touch IC is often proportional to the number of touch areas. If there are a large number of touch areas, the accuracy of the identification of the touch operation will be improved, but the product cost will be increased. If the number of touch areas is small, the product cost will be reduced, but the accuracy of identification of the touch operation is reduced at the same time.

### SUMMARY

In view of the above, the present disclosure provides a method and apparatus for identifying a touch operation, and an electronic device, which mainly aim at improving the accuracy of identification of touch operations to reduce the product cost, while reducing the number of touch areas.

In a first aspect, the present disclosure provides a method for identifying a touch operation. The method includes the following steps.

Upon receiving a touch operation on a touch region, a capacitance value corresponding to the touch operation is calculated, where a touch area of the touch region gradually decreases from one end to the other end.

An effective touch area of the touch operation on the touch region according to the capacitance value is calculated.

A touch control instruction corresponding to the touch operation is determined according to the capacitance value and the effective touch area.

Optionally, determining a touch control instruction corresponding to the touch operation according to the capacitance value and the effective touch area includes the following steps.

The capacitance value and the effective touch area are converted into a signal quantity.

The corresponding touch control instruction is determined according to the signal quantity and a predefined correspondence relationship between the signal quantity and a preset touch control instruction.

Optionally, determining a touch control instruction corresponding to the touch operation according to the capacitance value and the effective touch area further includes the following steps.

An operation type of the touch operation is determined.

If the touch operation is a sliding operation, a sliding direction of the touch operation in the touch region is determined according to a magnitude change trend of the signal quantity.

The control command is determined according to the magnitude change trend of the signal quantity and the sliding direction of the touch operation in the touch region.

Optionally, calculating the capacitance value corresponding to the touch operation includes the following steps.

A magnitude of a first current before the touch operation is received is acquired, and a magnitude of a second current after the touch operation is received is acquired.

A first capacitance value is calculated according to the magnitude of the first current and a rated voltage;

A second capacitance value is calculated according to the magnitude of the second current and the rated voltage.

A difference between the first capacitance value and the second capacitance value is determined as the capacitance value corresponding to the touch operation.

Optionally, calculating the capacitance value corresponding to the touch operation includes the following steps.

A magnitude of a first voltage before the touch operation is received is acquired, and acquiring a magnitude of a second voltage after the touch operation is received is acquired.

A third capacitance value is calculated according to the magnitude of the first voltage and a rated current.

A fourth capacitance value is calculated according to the magnitude of the second voltage and the rated current.

A difference between the third capacitance value and the fourth capacitance value is taken as the capacitance value corresponding to the touch operation.

Optionally, calculating the effective touch area of the touch operation on the touch region according to the capacitance value includes the following steps.

The effective touch area of the touch operation on the touch region is calculated according to the following formula: C = εS/4πkd.

*ε* denotes an electrical constant, C denotes the capacitance value, d denotes a distance between the touch region and a finger triggering the touch operation, and k denotes an electrostatic force constant.

In a second aspect, the present disclosure further provides an apparatus for identifying a touch operation. The apparatus includes: a first calculation unit, a second calculation unit, and a determination unit.

The first calculation unit is used for, upon receiving a touch operation on a touch region, calculating a capacitance value corresponding to the touch operation, where a touch area of the touch region gradually decreases from one end to the other end.

The second calculation unit is used for calculating an effective touch area of the touch operation on the touch region according to the capacitance value calculated by the first calculation unit.

The determination unit is used for determining a touch control instruction corresponding to the touch operation according to the capacitance value calculated by the first calculation unit and the effective touch area calculated by the second calculation unit.

Optionally, the determination unit includes a conversion module and a first determination module.

The conversion module is used for converting the capacitance value and the effective touch area into a signal quantity.

The first determination module is used for determining the touch control instruction corresponding to the touch operation according to the signal quantity converted by the conversion module and a predefined correspondence relationship between the signal quantity and a preset touch control instruction.

Optionally, the determination unit includes a second determination module, a third determination module and a fourth determination module.

The second determination module is used for determining an operation type of the touch operation.

The third determination module is used for, if the touch operation is a sliding operation, determining a sliding direction of the touch operation in the touch region according to a magnitude change trend of the signal quantity.

The fourth determination module is used for determining the control command according to the magnitude change trend of the signal quantity and the sliding direction of the touch operation in the touch region.

Optionally, the first calculation unit includes a first acquisition module, a first calculation module, a second calculation module and a first process module.

The first acquisition module is used for acquiring a magnitude of a first current before the touch operation is received, and acquiring a magnitude of a second current after the touch operation is received.

The first calculation module is used for calculating a first capacitance value according to the magnitude of the first current acquired by the first acquisition module and a rated voltage.

The second calculation module is used for calculating a second capacitance value according to the magnitude of the second current acquired by the first acquisition module and the rated voltage.

The first process module is used for taking a difference between the first capacitance value acquired by the first calculation module and the second capacitance value acquired by the second calculation module as the capacitance value corresponding to the touch operation.

Optionally, the first calculation unit includes a second acquisition module, a third calculation module, a fourth calculation module and a second process module.

The second acquisition module is used for acquiring a magnitude of a first voltage before the touch operation is received, and acquiring a magnitude of a second voltage after the touch operation is received.

The third calculation module is used for calculating a third capacitance value according to the magnitude of the first voltage acquired by the second acquisition module and a rated current.

The fourth calculation module is used for calculating a fourth capacitance value according to the magnitude of the second voltage acquired by the second acquisition module and the rated current.

The second process module is used for taking a difference between the third capacitance value acquired by the third calculation module and the fourth capacitance value acquired by the fourth calculation module as the capacitance value corresponding to the touch operation.

Optionally, the second calculation unit is further used for calculating the effective touch area of the touch operation on the touch region according to the following formula: C = εS/4πkd.

*ε* denotes an electrical constant, C denotes the capacitance value, d denotes a distance between the touch region and a finger triggering the touch operation, and k denotes an electrostatic force constant.

In a third aspect, the present disclosure provides an electronic device.

The electronic device includes one or more processor and a memory.

The memory is used for storing one or more programs.

When executed by the one or more processors, the one or more programs implement the method for identifying a touch operation according to any one of claims 1 to 6.

The present disclosure provides a method and apparatus for identifying a touch operation, and an electronic device. With the above technical solutions, upon receiving a touch operation on a touch region, a capacitance value corresponding to the touch operation is calculated, where a touch area of the touch region gradually decreases from one end to the other end; an effective touch area of the touch operation on the touch region is calculated according to the capacitance value; and a touch control instruction corresponding to the touch operation is determined according to the capacitance value and the effective touch area. Compared with the existing art, the present disclosure identifies a touch control instruction corresponding to a touch operation according to a capacitance value of the touch operation in a touch region and an effective area of the touch operation in the touch region, where the touch region is an asymmetric region; and the position of the touch operation in the touch region can be determined according to the effective touch area, thereby reducing the number of the touch regions and reducing the product cost, and improving the accuracy of identification of touch operation.

The above descriptions are general descriptions of the technical schemes of the present disclosure. To provide a clearer understanding of the technical means of the present disclosure and implement them according to the disclosure of the description, detailed descriptions are made below with preferred embodiments of the present disclosure in conjunction with the accompanying drawings.

### BRIEF DESCRIPTION OF THE DRAWINGS

Numerous additional advantages and benefits will become apparent to those of ordinary skill in the art upon reading the following detailed descriptions of the preferred embodiments. The drawings are merely used to illustrate the objectives of preferred embodiments and cannot be construed as limitations to the present disclosure. In the whole drawings, like reference numerals represent like components. In the drawings:
FIG. 1 is a flowchart of a method for identifying a touch operation according to an embodiment of the present disclosure;
FIG. 2 is a schematic diagram of a touch region in the existing art;
FIG. 3 is a schematic diagram of a touch region according to an embodiment of the present disclosure;
FIG. 4 is a schematic diagram of triangle sensing channels of a touch region according to an embodiment of the present disclosure;
FIG. 5 is a flowchart of another method for identifying a touch operation according to an embodiment of the present disclosure;
FIG. 6 is a schematic diagram of a touch wireless earphone according to an embodiment of the present disclosure;
FIG. 7 is a block diagram of an apparatus for identifying a touch operation according to an embodiment of the present disclosure;
FIG. 8 is a block diagram of another apparatus for identifying a touch operation according to an embodiment of the present disclosure; and
FIG. 9 is a block diagram of an electronic device according to an embodiment of the present disclosure.

### DESCRIPTION OF EMBODIMENTS

Exemplary embodiments of the present disclosure will be described below in greater detail with reference to the accompanying drawings. Although exemplary embodiments of the present disclosure are shown in the drawings, it should be understood that the present disclosure can be implemented in various forms and should not be limited by the embodiments set forth herein. On the contrary, these embodiments are provided to enable a thorough understanding of the present disclosure, and to fully convey the scope of the present disclosure to those skilled in the art.

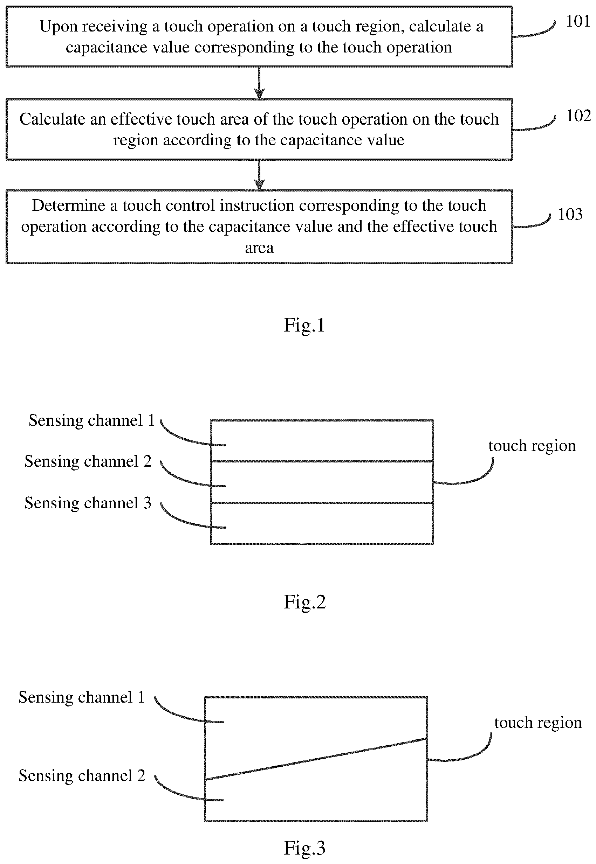

An embodiment of the present disclosure provides a method for identifying a touch operation. The method is applied to an electronic device that can be controlled through a touch operation. As shown in FIG. 1, the method includes the following steps.

In step 101, upon receiving a touch operation on a touch region, a capacitance value corresponding to the touch operation is calculated, where a touch area of the touch region decrease from one end to the other end.

The electronic device in the embodiment of the present disclosure includes at least touch region. The touch region is provided with a touch chip (touch IC), and the touch chip is used for receiving the touch operation triggered by a user and converting the touch operation into an electrical signal. A processor of the electronic device identified the electrical signal and converts the electrical signal into a touch control signal. The control process of the electronic device is performed through the control signal.

In the existing art, the touch region includes one or more sensing channels, the more the sensing channels, the higher the accuracy of the identification of the touch operation, the more expensive the electronic device including the touch region; while the less the sensing channels, the lower the accuracy of the identification of the touch operation, the cheaper the electronic device including the touch region. Typically, the sensing channel of the touch region in the existing art is symmetric. FIG. 2 is a schematic diagram of a touch region in the existing art. As shown in FIG. 2, the touch region includes three sensing channels, and each sensing channel has a symmetric shape (rectangle). When the user triggers the sensing channel in the touch region with the finger, the touch areas generated by touching different positions of the sensing channel are the same due to the symmetric shape of the sensing channel.

For the symmetric shape of the sensing channel in the touch region in the existing art, in order to accurately determine the specific touch position (touch point) of the user in the touch region, it also needs to determine the position coordinates of the touch point. The touch region is typically provided with a self-capacitive panel and a mutual capacitive panel. For the self-capacitive panel, in the touch detection of the self-capacitive panel, horizontal electrodes and vertical electrodes which are arranged in an array are detected sequentially and respectively. According to a change between the capacitance before the touch and a capacitance after the touch, the horizontal coordinate and the vertical coordinate of the touch point are determined respectively, and the horizontal coordinate and the vertical coordinate are combined as the plane coordinates of the touch. The scanning method of the self-capacitive touch is equivalent to projecting the touch point on the touch panel to the X-axis direction and Y-axis direction, and then the coordinates are calculated in the X-axis direction and Y-axis direction, and finally, they are combined into the coordinate of the touch point. If the touch operation is a single-point touch, the projection in the X-axis direction is unique, the projection in the Y-axis direction is unique, the combined coordinate is also unique. If there are two touch points on the touch panel and the two touch points are not aligned in the X-axis direction and not aligned in the Y-axis direction, the two touch points have two projections in the X-axis direction and two projections in the Y-axis direction, and thus there will be four combined coordinates. Apparently, only two coordinates are real, and the other two are called "ghost points". Therefore, the self-capacitive touch panel cannot achieve true multi-touch.

For the capacitive touch panel, the mutual capacitive touch panel is different from the self-capacitive touch panel in the following aspects. Capacitances are formed at intersections of two groups of electrodes, that is, the two groups of electrodes are two electrodes of the capacitance. When a finger touches the capacitive touch panel, the coupling between the two electrodes of the capacitance near the touch point, and thus the capacitance value between the two electrodes is changed. During the detection of the magnitude of the mutual capacitance, a stimulation signal is sent to the horizontal electrodes sequentially, and signals are received from all vertical electrodes simultaneously. In this way, the capacitance values of the intersections of all the horizontal electrodes and vertical electrodes are obtained, that is, the capacitance values in the two-dimensional plane of the touch panel. According to the two-dimensional capacitance change data of the touch panel, the coordinate of each touch point can be calculated. Therefore, even if there are multiple touch points on the panel, the true coordinate of each touch point can be calculated.

It can be seen from the above embodiments that, for the sensing channel with a symmetric shape in the touch region in the existing art, the key point of identifying a user's touch operation is to accurately calculate the coordinate position of the touch point.

The innovation of an image style of the touch region of the present disclosure will be described in detail below. FIG. 3 shows a schematic diagram of a touch region according to an embodiment of the present disclosure, the touch region has the same size as the touch region shown in FIG. 2. As shown in FIG. 3, the touch area includes 2 sensing channels, and the touch area of each sensing channel gradually decreases from one end to the other. When the finger operates at different positions of the sensing channel, the generated touch areas are different. In the embodiment of the present disclosure, through the unique shape design of the sensing channel, the number of required sensing channels of the electronic device is reduced, and the cost of the electronic device is greatly reduced without affecting the performance. FIG. 3 shows an example of the touch region which includes two trapezoidal sensing channels. In practical applications, the shape of the sensing channel may also be triangle. Specifically, the shape is not specifically limited in embodiments of the present disclosure.

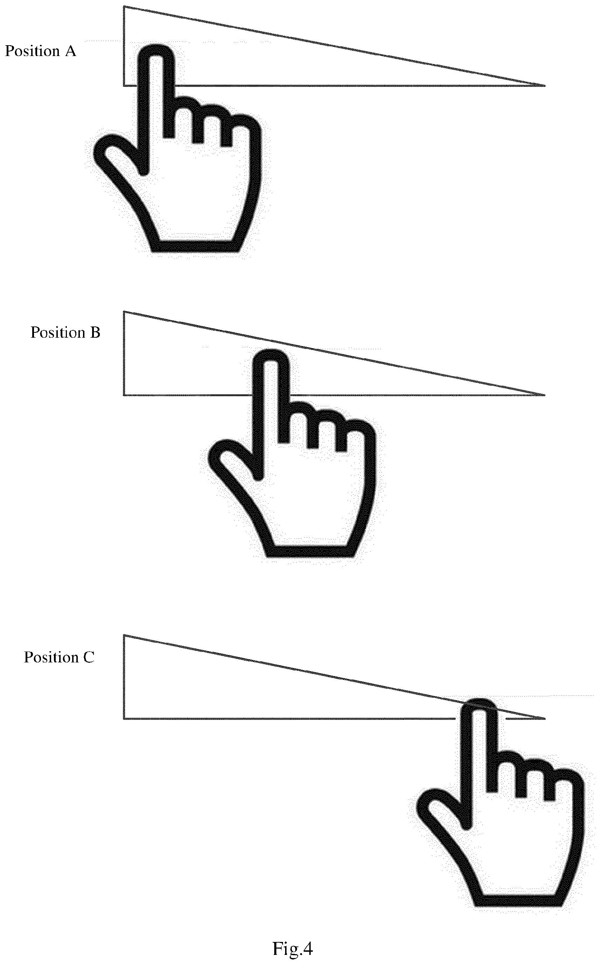

In another embodiment in which the sensing channel is triangle. As shown in FIG. 4, when the finger of the user touches a position A in a sensing region, the touch area of the touch region is largest; when the finger of the user touches a position B in the sensing region, the touch area of the touch region is moderate; when the finger of the user touches a position C in the sensing region, the touch area of the touch region is smallest. The actual size of the touch region and the actual size of the sensing channel are not limited in embodiments of the present disclosure.

The touch operation of the user in the touch region may be a right sliding touch, a left sliding touch, a signal clicking touch, a long press touch, a upward sliding touch, a downward sliding touch, and the like. In practical applications, compared with the sliding touch operation in the existing art, the sliding touch operation for the user can further improve the speed and accuracy of the identification of the touch operation.

After the touch IC receives the touch operation triggered by the user, the touch IC calculates the capacitance value corresponding to the touch operation based on a current change and a voltage change before receiving the touch operation and after receiving the touch operation. The method for calculating the capacitance value is not limited in embodiments of the present disclosure.

It should be noted that the electronic device in embodiments of the present disclosure may include, but not limited to, the following, for example, a touch-control wireless earphone, a tablet, a smart phone, a touch-control self-service ticketing / picking-up machine, a touch computer, and the like. Specifically, the type of the electronic device is not limited in embodiments of the present disclosure, but the electronic device should have one or more touch regions. For ease of description, the subsequent embodiments are described with an example in which the electronic device is a touch wireless earphone, and the touch region is the touch region of the wireless earphone. However, it should be clear that such description manner does not intend to limit the specific type of the electronic device.

In step 102, an effective touch area of the touch operation in the touch region is calculated according to the capacitance value.

Different from the existing art, with the improvement to the shape style of the sensing channel in the touch region of the embodiments of the present disclosure, the key point of the identification of the touch control instruction corresponding to the touch operation changes. The embodiments of the present disclosure are not emphasized in how to determine the detail coordinate position of the touch point in the touch region, but are emphasized in how to determine the effective contact area of the touch operation in the touch region according to the capacitance value.

When the capacitance value is known, through a formula, the effective touch area of the touch operation in the touch region is calculated according to the following formula: C = εS/4πkd. ε denotes an electrical constant, C denotes the capacitance value, d denotes a distance between the touch region and a finger triggering the touch operation, and k denotes an electrostatic force constant. It should be noted that in a same electronic device (touch wireless earphone), the distance between the touch region and the finger is the same, so in the above formula, C, ε, *π*, k and a are all constants, and only the effective contact area S is unknown.

In step 103, the touch control instruction corresponding to the touch operation is determined according to the capacitance value and the effective touch area.

After the touch chip acquires the touch operation, the capacitance value and the effective touch area, the touch chip transmits them to a processor of the wireless earphone, such that the processor of the touch wireless earphone controls the touch wireless earphone according to the identified touch control instruction of the touch wireless earphone.

According to the change of the capacitance value, the operation type of the present touch operation of the user can be determined. The operation type includes: single clicking, double clicking, long press, sliding, and the like. For example, the capacitance value of the first touch operation received in the touch region is 1 F, in a continuous time period (0.03 second), the capacitance value of the second touch operation received in the touch region is 1.01 F, it can be determined that the present touch operation is a double clicking operation and the effective touch areas of the two touch operations are the same or similar. If the capacitance value of the first touch operation received in the touch region is 2 F, in a continuous time period (0.05 second), the capacitance value decreases gradually and the effective touch area decreases gradually, it can be determined that the present touch operation is an up-and-down sliding operation.

When the touch IC identifies the sliding operation, the touch IC may receive a change of a current or voltage, calculate a change of the capacitance according to the change of the current or voltage, and calculate a change of the effective touch area according to the change of the capacitance. The touch IC transmits the change of the effective touch area to the processor of the touch wireless earphone, and the processor calculates the specific position of the touch according to the change of the effective contacting area.

When the processor determines the touch control instruction corresponding to the touch operation, the processor determines the touch control instruction according to a preset touch control instruction determining rule, as shown in Table 1. Table 1 records a mapping relationship between the touch operation and the touch control instruction. After the touch IC determines the touch operation, the capacitance value and the effective touch area, the processor of the touch wireless earphone can determine the touch control instruction according to the content of Table 1 and execute the touch control instruction. Table 1 is just an exemplary example. The mapping relationship between the effective contacting area and the operation type of the touch operation and the touch control instruction is not limited in embodiments of the present disclosure.

**Table 1**

| Operation type of the touch operation | Effective touch area | Touch control instruction |
|---|---|---|
| Single clicking | Any value greater than 0 | Pause playing / hang up |
| Double clicking | Any value greater than 0 | Next |
| Up-down sliding | Increase from small to large | Volume + |
| Up-down sliding | Decrease from large to small | Volume - |
| Sliding to left | Any value greater than 0 | Back |
| Sliding to right | Any value greater than 0 | Fast forward |
| ... ... | ... ... | ... ... |

Embodiments of the present disclosure provides a method for identifying a touch operation. Upon receiving a touch operation on a touch region, a capacitance value corresponding to the touch operation is calculated, where a touch area of the touch region gradually decreases from one end to the other end. An effective touch area of the touch operation on the touch region according to the capacitance value is calculated. A touch control instruction corresponding to the touch operation is determined according to the capacitance value and the effective touch area. Compared with the existing art, the embodiment of the present disclosure identifies a touch control instruction corresponding to a touch operation according to a capacitance value of the touch operation in a touch region and an effective area of the touch operation in the touch region, where the touch region is an asymmetric region. The position of the touch operation in the touch region can be determined according to the effective touch area, thereby reducing the number of the touch regions and reducing the product cost, and improving the accuracy of identification of touch operation.

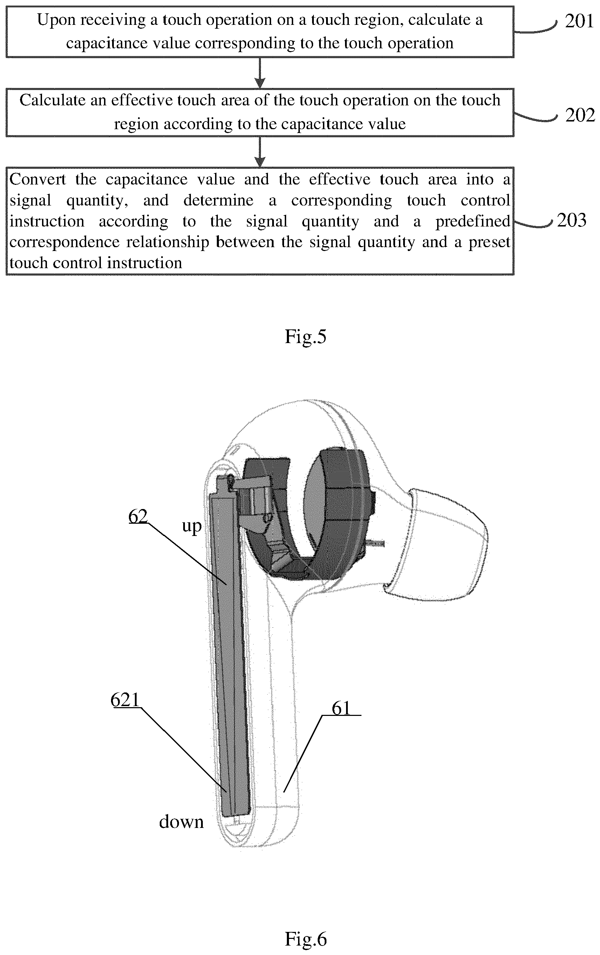

Further, as a refinement and extension of the embodiment shown in FIG. 1, an embodiment of the present disclosure further provided another method for identifying a touch operation. The method is used in a touch wireless earphone. As shown in FIG. 5, the method includes the following steps.

In step 201, upon receiving a touch operation on a touch region, a capacitance value corresponding to the touch operation is calculated, where a touch area of the touch region gradually decreases from one end to the other end.

For details about the touch region and touch operation, please refer to the detailed description of step 101.

In practical applications, the capacitance value corresponding to the touch operation can be calculated in the following two manners.

In a manner one, a voltage is constant, and the capacitance value is calculated based on a rated voltage and a current.

When the touch region of the touch wireless earphone is not touched by a user, a first current is generated in the touch region. When the touch region of the touch wireless earphone is touched by a user, a second current is generated in the touch region. The magnitude of the first current is significantly different from the magnitude of the second current due to a change between before the touch and after the touch. The touch IC calculates a first capacitance value according to the magnitude of the first current and the rated voltage, and calculates a second capacitance value according to the magnitude of the second current and the rated voltage. The touch IC calculates the capacitance value according to the following formula: C=K I/U, where K is a constant, I is the first current or second current acquired by the touch IC, and U is the rated voltage of the touch wireless earphone.

After the first capacitance value and the second capacitance value are calculated according to the above formula respectively, a difference between the first capacitance value and the second capacitance value is regarded as the capacitance value corresponding to the touch operation.

In a manner two, the current is constant, and the capacitance value is calculated according to the voltage and the rated current.

Similar to the manner one, the calculation of the capacitance value depends on a fixed quantity. In this embodiment, the fixed quantity is current. When the touch region of the touch wireless earphone is not touched by the user, a first voltage is generated in the touch region. When the touch region of the touch wireless earphone is touched by the user, a second voltage is generated in the touch region. The magnitude of the first voltage is significantly different from the magnitude of the second voltage due to a change between before the touch and after the touch. The touch IC calculates a first capacitance value according to the magnitude of the first voltage and the rated current, and calculates a second capacitance value according to the magnitude of the second voltage and the rated current. The touch IC calculates the capacitance value according to the following formula: C=K I/U, where K is a constant, U is the first voltage or second voltage acquired by the touch IC, and I is the rated current of the touch wireless earphone.

After the first capacitance value and the second capacitance value are calculated according to the above formula respectively, a difference between the first capacitance value and the second capacitance value is regarded as the capacitance value corresponding to the touch operation.

In step 202, the effective touch area of the touch operation in the touch region is calculated according to the capacitance value (same as step 102).

For the method of calculating the effective touch area, the following formula can be used: C = εS/4πkd. For details, please refer to the detailed description of the foregoing embodiment, which is not repeatedly described in the embodiment of the present disclosure.

In step 203, the capacitance value and the effective touch area are converted into a signal quantity, and the corresponding touch control instruction is determined according to the signal quantity and a predefined correspondence relationship between the signal quantity and the preset touch control instruction.

In order to improve the speed of the identification of the touch operation, the processor of the wireless touch earphone converts, after acquiring the effective touch area, the capacitance value and the effective touch area into a signal quantity, and determines the corresponding touch control instruction according to the signal quantity and the predefined correspondence relationship between the signal quantity and the preset touch control instruction. The purpose of converting the capacitance value and the effective touch area into a signal quantity is to simplify the steps of identifying the touch control instruction and improve the speed of identifying the touch operation.

Exemplarily, the signal quantity at the touch position A in FIG. 4 can be set to 100 K, the signal quantity at the touch position B is 50 K, the signal quantity at the touch position C is 1 K, where K is a constant and is associated with the material, manufacturing and design of the touch region.

Exemplarily, FIG. 6 is a schematic diagram of a touch wireless earphone according to an embodiment of the present disclosure. As shown in FIG. 6, the touch wireless earphone includes an earphone body 61 and a touch region 62. The touch region 62 includes one triangle sensing channel 621. The user can perform touch operations in the touch region 62 according to own practical needs.

The drive IC in embodiments of the present disclosure can touch this kind of operation of the user. When the touch IC receives a user's sliding operation in the touch region, the touch IC identifies the touch control instruction corresponding to the touch operation, and its advantage is distinct. Since the sliding operation is a continuous operation of the user, the effective touch area corresponding to the continuous operation in the touch region changes evidently. For example, when the user performs a top-to-bottom sliding in the touch region shown in FIG. 6, the capacitance value decreases continuously, and the effective touch area decrease along with the capacitance value.

After the capacitance value and the effective touch area are converted into the signal quantity, the processor identifies the sliding direction of the finger of the user according to the magnitude change of the signal quantity. The specific process is as follows. The processor firstly determines the operation type of the touch operation. If the touch operation is a sliding operation, the processor determines the sliding direction of the touch operation in the touch region according to the magnitude change trend of the signal quantity, and determines the control instruction according to the sliding direction of the touch operation in the touch region and the magnitude change trend of the signal quantity. For example, when the signal quantity changes from small to large, it can be determined that the finger of the user slides from the bottom to the top of FIG. 6, and an operation of increasing the sound volume is executed.

It should be noted that, for other operations (other than the sliding operation) such as single clicking, double clicking, long pressing, and the like, the efficiency of identifying the corresponding touch control instruction based on the effective touch area is lower than that of identifying the touch control instruction of the sliding operation. However, compared with the existing art in which the touch wireless earphone is controlled through a smart terminal device connected to the touch wireless earphone, such identifying manner has significant advantages. The control instruction can be initiated and executed directly on the touch wireless earphone without the need of the assistance of a connected device. The identifying of single clicking, double clicking, and long pressing operations is more based on the change of the capacitance value or the continuous change of the capacitance value rather than the effective touch area. Exemplarily, when the user performs a double clicking operation on the upper part of the sensing channel shown in FIG. 6, the processor identifies that the touch operation is a double clicking operation; when the user performs a double clicking operation on the lower part of the sensing channel, the processor also identifies that the touch operation is a double clicking operation. The key point of the single clicking, double clicking, and long pressing operations is that the touch operation is performed on the sensing channel.

It should be emphasized that FIG. 6 uses a single sensing channel as an example. In practical applications, if the touch region is applied to an electronic device with a large touch region such as a tablet or a smart phone, multiple sensing channels are provided in the touch region at the same time, and the manner of performing touch reception and identification is the same as that of one sensing channel. Specifically, the operating mode of the touch region including multiple sensing channels is not limited in embodiment of the present disclosure.

Further, as an implementation of the method shown in FIG. 1 and FIG. 2, another embodiment of the present disclosure further provides an apparatus for identifying a touch operation. This apparatus embodiment corresponds to the foregoing method embodiment. For ease of reading, this apparatus embodiment does not repeat the details of the foregoing method embodiment, but it should be clear that the apparatus in this embodiment can correspondingly implement all the content in the foregoing method embodiment.

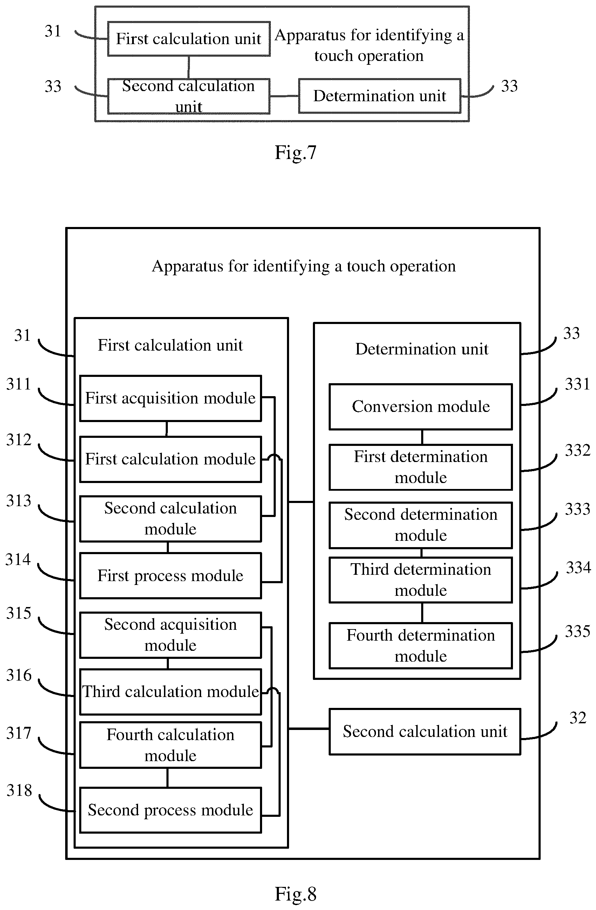

An embodiment of the present disclosure provides an apparatus for identifying a touch operation. As shown in FIG. 7, the apparatus includes a first calculation unit 31, a second calculation unit 32, and a determination unit 33.

The first calculation unit 31 is configured to, upon receiving a touch operation on a touch region, calculate a capacitance value corresponding to the touch operation, where a touch area of the touch region gradually decreases from one end to the other end.

The second calculation unit 32 is configured to calculate an effective touch area of the touch operation on the touch region according to the capacitance value calculated by the first calculation unit 31.

The determination unit 33 is configured to determine a touch control instruction corresponding to the touch operation according to the capacitance value calculated by the first calculation unit 31 and the effective touch area calculated by the second calculation unit.

Further, as shown in FIG. 8, the determination unit 33 includes a conversion module 331 and a first determination module 332.

The conversion module 331 is configured to convert the capacitance value and the effective touch area into a signal quantity.

The first determination module 332 is configured to determine the corresponding touch control instruction according to the signal quantity converted by the conversion module 331 and a predefined correspondence relationship between the signal quantity and a preset touch control instruction.

Further, as shown in FIG. 8, the determination unit 33 further includes a second determination module 333, a third determination module 334, and a fourth determination module 335.

The second determination module 333 is configured to determine an operation type of the touch operation.

The third determination module 334 is configured to, if the touch operation is a sliding operation, determine a sliding direction of the touch operation in the touch region according to a magnitude change trend of the signal quantity.

The fourth determination module 335 is configured to determine the control command according to the magnitude change trend of the signal quantity and the sliding direction of the touch operation in the touch region.

Further, as shown in FIG. 8, the first calculation unit 31 includes a first acquisition module 311, a first calculation module 312, a second calculation module 313, and a first process module 314.

The first acquisition module 311 is configured to acquire a magnitude of a first current before the touch operation is received, and acquire a magnitude of a second current after the touch operation is received.

The first calculation module 312 is configured to calculate a first capacitance value according to the magnitude of the first current acquired by the first acquisition module 311 and a rated voltage.

The second calculation module 313 is configured to calculate a second capacitance value according to the magnitude of the second current acquired by the first acquisition module 311 and the rated voltage.

The first process module 314 is configured to take a difference between the first capacitance value acquired by the first calculation module 312 and the second capacitance value acquired by the second calculation module 313 as the capacitance value corresponding to the touch operation.

Further, as shown in FIG. 8, the first calculation unit 31 includes a second acquisition module 315, a third calculation module 316, a fourth calculation module 317 and a second process module 318.

The second acquisition module 315 is configured to acquire a magnitude of a first voltage before the touch operation is received, and acquire a magnitude of a second voltage after the touch operation is received.

The third calculation module 316 is configured to calculate a third capacitance value according to the magnitude of the first voltage acquired by the second acquisition module 315 and a rated current.

The fourth calculation module 317 is configured to calculate a fourth capacitance value according to the magnitude of the second voltage acquired by the second acquisition module 315 and the rated current.

The second process module 318 is configured to take a difference between the third capacitance value acquired by the third calculation module 316 and the fourth capacitance value acquired by the fourth calculation module 317 as the capacitance value corresponding to the touch operation.

Further, the second calculation unit 32 is further configured to calculate the effective touch area of the touch operation on the touch region according to the following formula: C = εS/4πkd.

ε denotes an electrical constant, C denotes the capacitance value, d denotes a distance between the touch region and a finger triggering the touch operation, and k denotes an electrostatic force constant.

The embodiment of the present disclosure provides an apparatus for identifying a touch operation. Upon receiving a touch operation on a touch region, a capacitance value corresponding to the touch operation is calculated, where a touch area of the touch region gradually decreases from one end to the other end. An effective touch area of the touch operation on the touch region is calculated according to the capacitance value. A touch control instruction corresponding to the touch operation is determined according to the capacitance value and the effective touch area. Compared with the existing art, the embodiment of the present disclosure identifies a touch control instruction corresponding to a touch operation according to a capacitance value of the touch operation in a touch region and an effective area of the touch operation in the touch region, where the touch region is an asymmetric region. The position of the touch operation in the touch region can be determined according to the effective touch area, thereby reducing the number of the touch regions and reducing the product cost, and improving the accuracy of identification of touch operation.

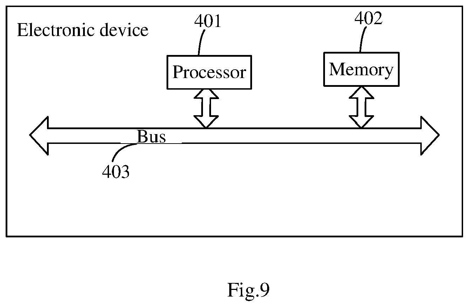

Further, as shown in FIG. 9, an embodiment of the present disclosure further provides an electronic device. The electronic device may include, but not limited to, the following, for example, a touch wireless earphone, a tablet, a smart phone, a touch self-service ticketing / picking-up machine, a touch computer, and the like.

The electronic device includes one or more processor 401 and a memory 402.

The memory 402 is used for storing one or more programs.

Execution of the one or more programs by the one or more processors cause the one or more processors to implement the following method. The method includes the following steps.

Upon receiving a touch operation on a touch region, a capacitance value corresponding to the touch operation is calculated, where a touch area of the touch region gradually decreases from one end to the other end.

An effective touch area of the touch operation on the touch region according to the capacitance value is calculated.

A touch control instruction corresponding to the touch operation is determined according to the capacitance value and the effective touch area.

The processors 401 and the memory 402 communicate with each other through a bus 403.

Optionally, determining a touch control instruction corresponding to the touch operation according to the capacitance value and the effective touch area includes the following steps.

The capacitance value and the effective touch area are converted into a signal quantity.

The corresponding touch control instruction is determined according to the signal quantity and a predefined correspondence relationship between the signal quantity and a preset touch control instruction.

Optionally, the determining a touch control instruction corresponding to the touch operation according to the capacitance value and the effective touch area further includes the following steps.

An operation type of the touch operation is determined.

If the touch operation is a sliding operation, a sliding direction of the touch operation in the touch region is determined according to a magnitude change trend of the signal quantity.

The control command is determined according to the magnitude change trend of the signal quantity and the sliding direction of the touch operation in the touch region.

Optionally, the calculating the capacitance value corresponding to the touch operation includes the following steps.

A magnitude of a first current before the touch operation is received is acquired, and a magnitude of a second current after the touch operation is received is acquired.

A first capacitance value is calculated according to the magnitude of the first current and a rated voltage.

A second capacitance value is calculated according to the magnitude of the second current and the rated voltage.

A difference between the first capacitance value and the second capacitance value is determined as the capacitance value corresponding to the touch operation.

Optionally, the calculating the capacitance value corresponding to the touch operation includes the following steps.

A magnitude of a first voltage before the touch operation is received is acquired, and acquiring a magnitude of a second voltage after the touch operation is received is acquired.

A third capacitance value is calculated according to the magnitude of the first voltage and a rated current.

A fourth capacitance value is calculated according to the magnitude of the second voltage and the rated current.

A difference between the third capacitance value and the fourth capacitance value is taken as the capacitance value corresponding to the touch operation.

Optionally, calculating the effective touch area of the touch operation on the touch region according to the capacitance value includes the following steps.

The effective touch area of the touch operation on the touch region is calculated according to the following formula: C = εS/4πkd.

ε denotes an electrical constant, C denotes the capacitance value, d denotes a distance between the touch region and a finger triggering the touch operation, and k denotes an electrostatic force constant.

In the above embodiments, the descriptions of various embodiments are emphasized differently, and a reference for the part not described in detail in an embodiment can be made to related descriptions of other embodiments.

It can be understood that the relevant features in the above device can be mutually referenced. In addition, the terms "first", "second" and the like in the above embodiments are used for distinguishing various embodiments, and do not represent the advantages and disadvantages of the embodiments.

Those skilled in the art can clearly understand that, for ease and conciseness of description, the specific working processes of the system, device, and units described above can refer to the corresponding processes in the foregoing method embodiments, and are not repeated here.

The algorithms and displays presented herein are not inherently related to any particular computer or other apparatus. Various general-purpose systems may also be used with programs in accordance with the teachings herein, or it may prove convenient to construct more specialized apparatus to perform the required method steps. The required structure for a variety of these systems will appear from the description above. In addition, the present disclosure is not described with reference to any particular programming language. It is appreciated that a variety of programming languages may be used to implement the teachings of the present disclosure as described herein, and any references to specific languages are provided for disclosure of enablement and best mode of the present disclosure.

In the specification provided herein, numerous specific details are described. However, it is to be understood that the embodiments of the present disclosure can be practiced without these specific details. In some examples, well-known structures and techniques are not shown in detail in order not to obscure the understanding of the specification.

Similarly, it should be understood that various features of the present disclosure sometimes are grouped into a single embodiment, drawing or description thereof in the above descriptions of the exemplary embodiments of the present disclosure for the sake of simplifying the disclosure and helping understanding one or more of various disclosure aspects. However, the disclosed device should not be interpreted as reflecting the following intention: the claimed disclosure requires more features than those expressly recited in each claim. Rather, as reflected by following claims, the disclosure aspects are less than all features of a single embodiment disclosed above. Accordingly, a claim following a specific embodiment is hereby expressly incorporated into this embodiment, wherein each claim serves as an individual embodiment of the present disclosure.

Those skilled in the art can understand that the components of the device in an embodiment can be adaptively modified and arranged in one or more devices different from the embodiment. The components in an embodiment may be combined into one component, and in addition, they may be divided into a plurality of sub-components. Except that at least some of such features are mutually exclusive, all of the features disclosed in the present description (including accompanying claims, abstract and drawings) and all components of any device disclosed so can be combined in any combination. Unless explicitly stated otherwise, each feature disclosed in the present description (including accompanying claims, abstract, and drawings) can be replaced by an alternative feature that provides the same, equivalent, or similar purpose.

In addition, those skilled in the art can understand that although some embodiments described herein include some features included in other embodiments rather than other features, combinations of features of different embodiments are meant to be within the scope of the present invention and form different embodiments. For example, in the following claims, any one of the claimed embodiments can be used in any combination manner. Various component embodiments of the present invention may be implemented by hardware, or in a combination thereof.

The various component embodiments of the present disclosure may be implemented in hardware, or in software modules running on one or more processors, or in a combination thereof. Those skilled in the art should understand that a microprocessor or a digital signal processor (DSP) may be used in practice to implement some or all functions of some or all of the components in the wireless earpiece and the wireless earpiece control method according to embodiments of the present disclosure. Features. The present disclosure may also be implemented as a device or device program (e.g., a computer program and a computer program product) for performing part or all of the methods described herein. Such a program that implements the present disclosure may be stored on a computer-readable medium or may have the form of one or more signals. Such signals can be downloaded from an Internet website, provided on a carrier signal, or provided in any other form.

It should be noted that the above embodiments are intended to illustrate the present disclosure rather than to limit the present invention, and alternative embodiments can be devised by those skilled in the art without departing from the scope of the appended claims. In the claims, any reference symbols between brackets should not be constructed as limitations to the claims. The term "comprising" does not preclude the presence of a component or assembly that is not listed in the claims. The terms "a" or "an" before a component or assembly do not preclude the presence of a plurality of such components or assemblies. The present invention can be implemented by means of a device comprising a plurality of different components. In a claim in which a plurality of components are listed, the plurality of such components can be embodied by the same component item. The use of the terms "first", "second", "third" and the like does not represent any order. Such terms can be interpreted as names.

## Claims

1. A method for identifying a touch operation, comprising:
upon receiving a touch operation on a touch region, calculating a capacitance value corresponding to the touch operation, wherein a touch area of the touch region gradually decreases from one end to the other end;
calculating an effective touch area of the touch operation on the touch region according to the capacitance value; and
determining a touch control instruction corresponding to the touch operation according to the capacitance value and the effective touch area.

2. The method according to claim 1, wherein determining a touch control instruction corresponding to the touch operation according to the capacitance value and the effective touch area comprises:
converting the capacitance value and the effective touch area into a signal quantity; and
determining the corresponding touch control instruction according to the signal quantity and a predefined correspondence relationship between the signal quantity and a preset touch control instruction.

3. The method according to claim 2, wherein determining a touch control instruction corresponding to the touch operation according to the capacitance value and the effective touch area further comprises:
determining an operation type of the touch operation;
if the touch operation is a sliding operation, determining a sliding direction of the touch operation in the touch region according to a magnitude change trend of the signal quantity; and
determining the control command according to the magnitude change trend of the signal quantity and the sliding direction of the touch operation in the touch region.

4. The method according to any one of claims 1 to 3, wherein calculating the capacitance value corresponding to the touch operation comprises:
acquiring a magnitude of a first current before the touch operation is received, and acquiring a magnitude of a second current after the touch operation is received;
calculating a first capacitance value according to the magnitude of the first current and a rated voltage;
calculating a second capacitance value according to the magnitude of the second current and the rated voltage; and
taking a difference between the first capacitance value and the second capacitance value as the capacitance value corresponding to the touch operation.

5. The method according to any one of claims 1 to 3, wherein calculating the capacitance value corresponding to the touch operation comprises:
acquiring a magnitude of a first voltage before the touch operation is received, and acquiring a magnitude of a second voltage after the touch operation is received;
calculating a third capacitance value according to the magnitude of the first voltage and a rated current;
calculating a fourth capacitance value according to the magnitude of the second voltage and the rated current; and
taking a difference between the third capacitance value and the fourth capacitance value as the capacitance value corresponding to the touch operation.

6. The method according to any one of claims 1 to 3, wherein calculating the effective touch area of the touch operation on the touch region according to the capacitance value comprises:
calculating the effective touch area of the touch operation on the touch region according to the following formula: C = εS/4πkd,
wherein *ε* denotes an electrical constant, C denotes the capacitance value, d denotes a distance between the touch region and a finger triggering the touch operation, and k denotes an electrostatic force constant.

7. An apparatus for identifying a touch operation, comprising:
a first calculation unit for upon receiving a touch operation on a touch region, calculating a capacitance value corresponding to the touch operation, wherein a touch area of the touch region gradually decreases from one end to the other end;
a second calculation unit for calculating an effective touch area of the touch operation on the touch region according to the capacitance value calculated by the first calculation unit; and
a determination unit for determining a touch control instruction corresponding to the touch operation according to the capacitance value calculated by the first calculation unit and the effective touch area calculated by the second calculation unit.

8. The apparatus according to claim 7, wherein the determination unit comprises:
a conversion module for converting the capacitance value and the effective touch area into a signal quantity; and
a first determination module for determining the corresponding touch control instruction according to the signal quantity converted by the conversion module and a predefined correspondence relationship between the signal quantity and a preset touch control instruction.

9. The apparatus according to claim 8, wherein the determination unit comprises:
a second determination module for determining an operation type of the touch operation;
a third determination module for if the touch operation is a sliding operation, determining a sliding direction of the touch operation in the touch region according to a magnitude change trend of the signal quantity; and
a fourth determination module for determining the control command according to the magnitude change trend of the signal quantity and the sliding direction of the touch operation in the touch region.

10. The apparatus according to any one of claims 7 to 9, wherein the first calculation unit comprises:
a first acquisition module for acquiring a magnitude of a first current before the touch operation is received, and acquiring a magnitude of a second current after the touch operation is received;
a first calculation module for calculating a first capacitance value according to the magnitude of the first current acquired by the first acquisition module and a rated voltage;
a second calculation module for calculating a second capacitance value according to the magnitude of the second current acquired by the first acquisition module and the rated voltage; and
a first process module for taking a difference between the first capacitance value acquired by the first calculation module and the second capacitance value acquired by the second calculation module as the capacitance value corresponding to the touch operation.

11. The apparatus according to any one of claims 7 to 9, wherein the first calculation unit comprises:
a second acquisition module for acquiring a magnitude of a first voltage before the touch operation is received, and acquiring a magnitude of a second voltage after the touch operation is received;
a third calculation module for calculating a third capacitance value according to the magnitude of the first voltage acquired by the second acquisition module and a rated current;
a fourth calculation module for calculating a fourth capacitance value according to the magnitude of the second voltage acquired by the second acquisition module and the rated current; and
a second process module for taking a difference between the third capacitance value acquired by the third calculation module and the fourth capacitance value acquired by the fourth calculation module as the capacitance value corresponding to the touch operation.

12. The apparatus according to any one of claims 7 to 9, wherein the second calculation unit is further used for calculating the effective touch area of the touch operation on the touch region according to the following formula: C = εS/4πkd,
wherein *ε* denotes an electrical constant, C denotes the capacitance value, d denotes a distance between the touch region and a finger triggering the touch operation, and k denotes an electrostatic force constant.

13. A memory for storing one or more programs,
wherein when executed by one or more processors, the one or more programs implement the method for identifying a touch operation according to any one of claims 1 to 6.

14. An electronic device, comprising:
one or more processors;
a memory for storing one or more programs;
wherein when executed by the one or more processors, the one or more programs implement the method for identifying a touch operation according to any one of claims 1 to 6.
